# EUROPEAN PATENT APPLICATION

(11) **EP 4 800 504 A2**
(43) Date of publication of application: **02.09.2026**
(21) Application number: 26183518.5
(22) Date of filing: 05.07.2022
(51) Int. Cl.: G05D 1/00

(54) **AGRICULTURAL PATH PLANNING**

(30) Priority: 06.07.2021 US 202163218763 P
(62) Document number(s) of the earlier application(s) in accordance with Art. 76 EPC: 22748603.2 / 4 366 495
(71) Applicant: Deere & Company, Moline, IL 61265-8098 (US)
(72) Inventor: HEBB, Daniel, Palo Alto (US); HUBER-FEELY, Noah, Palo Alto (US)
(74) Representative: EIP

(57) **Abstract**

Systems and methods for agricultural path planning are described. For example, a method includes accessing a boundary data structure that encodes a polygon on a map; generating a set of parallel line segments of a path for a vehicle on the map inside of the polygon; generating a first line segment of the path connecting an ending-point of one of the line segments of the set to a starting-point of another one of the line segments of the set; identifying a first point on the first line segment that is a maximum distance from the polygon; and splitting the first line segment into two line segments, having a starting-point matching a starting-point of the first line segment and an ending-point matching an ending-point of the first line segment, that connect at a second point on the polygon encoded by the boundary data structure that is closest to the first point.

## Description

### TECHNICAL FIELD

This disclosure relates to agricultural path planning.

### BACKGROUND

Autonomous vehicles have been made for automated navigation on roads and obstacle courses. These autonomous vehicles use sensors, such as cameras and lidar, to sense objects in their environment. For example, an autonomous vehicle may generate motion plans and affect those motion plans by controlling wheels of the vehicles via control of an engine and transmission system, a braking system, and a steering system. US6907336B2 relates to a method and a system for efficiently traversing an area with a work vehicle, EP3518647A1 relates to a system and a method for determining a trajectory to be followed by an agricultural work vehicle, US2021/000006A1 relates to agricultural lane following, WO2019/136510A1 relates to coverage path planning, and CN108334068A relates to driving path generating means.

### SUMMARY

Disclosed herein are implementations of agricultural path planning.

In a first aspect, the subject matter described in this specification can be embodied in methods that include accessing a boundary data structure that encodes a polygon on a map; generating a set of parallel line segments of a path for a vehicle on the map inside of the polygon encoded by the boundary data structure; generating a first line segment of the path connecting an ending-point of one of the line segments of the set of parallel line segments to a starting-point of another one of the line segments of the set of parallel line segments; identifying a first point on the first line segment that is a maximum distance from the polygon encoded by the boundary data structure; splitting the first line segment into two line segments, having a starting-point matching a starting-point of the first line segment and an ending-point matching an ending-point of the first line segment, that connect at a second point on the polygon encoded by the boundary data structure that is closest to the first point; determining a smoothed path based on the path, wherein the smooth path includes curved turns between consecutive line segments of the path; and storing or transmitting a path data structure based on the smoothed path.

In the first aspect, the methods may include determining, based on a turning radius of the vehicle, a size, in number of line segments of the set of parallel line segments of a path, of a repeating land pattern for traversing a subset of the set of parallel line segments that are adjacent to other members of the subset; adding a first line segment of the subset to the path to be traversed in a first direction; adding a second line segment of the subset to the path after the first line segment to be traversed in a second direction opposite of the first direction, wherein there are N line segments of the subset positioned between the first line segment and the second line segment, where N is equal to half of one less than the size of the land pattern; and adding a third line segment of the subset to the path after the second line segment to be traversed in the first direction, wherein the third segment is one of the N line segments of the subset positioned between the first line segment and the second line segment that is adjacent to the first line segment. In the first aspect, the methods may include continuing to add line segments to the path by skipping forward over N line segments then skipping back over N minus one line segments until the last of the N line segments of the subset positioned between the first line segment and the second line segment that is adjacent to the second line segment is added to the path to be traversed in the first direction. The methods may include adding another subset of the set of parallel line segments to the path using the land pattern of the size, starting with a first line segment outside of the subset, wherein there are N line segments of the set of parallel line segments positioned between the last line segment of the subset and the first line segment outside of the subset. In the first aspect, the methods may include recursively splitting line segments of the path between the starting-point of the first line segment and the ending-point of the first line segment into pairs of line segments that connect at a point on the polygon encoded by the boundary data structure, until a maximum distance between any point along the path between the starting-point of the first line segment and the ending-point of the first line segment and the polygon encoded by the boundary data structure is less than a threshold. In the first aspect, the methods may include accessing an obstacle data structure that encodes a polygon on the map; identifying a line segment of the path that intersects with the polygon encoded by the obstacle data structure as a blocked line segment; splitting the blocked line segment into three line segments of the path between a starting-point of the blocked line segment and an entry-point on the blocked line segment where the path enters the polygon encoded by the obstacle data structure, between the entry-point and an exit-point on the blocked line segment where the path exits the polygon encoded by the obstacle data structure, and between the exit-point and an ending-point of the blocked line segment; and splitting the line segment between the entry-point and the exit-point into two line segments, having a starting-point matching the entry-point and an ending-point matching the exit-point, that connect at a third point on the polygon encoded by the obstacle data structure that is closest to a midpoint of the line segment between the entry-point and the exit-point. In the first aspect, the methods may include recursively splitting line segments of the path between the entry-point and the exit-point into pairs of line segments that connect at a point on the polygon encoded by the obstacle data structure, until a maximum distance between any point along the path between the entry-point and the exit-point and the polygon encoded by the obstacle data structure is less than a threshold. In the first aspect, the methods may include accessing an implement-control data structure that encodes a polygon on the map and indicates a configuration for an implement attached to the vehicle; identifying a line segment of the path that is positioned within the polygon encoded by the implement-control data structure as a controlled line segment; and associating the controlled line segment with the configuration for the implement. In the first aspect, the methods may include identifying a line segment of the path that is intersects with the polygon encoded by the implement-control data structure as an impacted line segment; and splitting the impacted line segment into two or more line segments of the path between a starting-point of the impacted line segment and an ending-point of the impacted line segment, wherein at least one of the two or more line segments is positioned within the polygon encoded by the implement-control data structure and is identified as a controlled line segment and at least one of the two or more line segments is positioned outside of the polygon encoded by the implement-control data structure. In the first aspect, accessing the implement-control data structure may include presenting the map with the line segments of the path in a graphical user interface; receiving data specifying vertices of the polygon encoded by the implement-control data structure that is based on user interaction with the graphical user interface; and receiving data indicating the configuration for the implement that is based on user interaction with the graphical user interface. In the first aspect, the vehicle may be a tractor, the implement may be a tillage implement, and the configuration for the implement may specify a depth at which the tillage implement will be dragged. In the first aspect, a pair of consecutive line segments of the path may be tagged with a connection type chosen from a set that includes fillet turn and bulb turn, and wherein determining the smoothed path based on the path may include generating a curve connecting the pair of consecutive line segments of the path based on the connection type and a turning radius parameter of the vehicle. In the first aspect, the methods may include receiving data from a user interface identifying an edge of the polygon encoded by the boundary data structure and an angle with respect to the identified edge, wherein the set of parallel line segments are generated to be oriented at the angle with respect to the identified edge.

In a second aspect, the subject matter described in this specification can be embodied in systems that include a processing apparatus configured to: access a boundary data structure that encodes a polygon on a map; generate a set of parallel line segments of a path for a vehicle on the map inside of the polygon encoded by the boundary data structure; generate a first line segment of the path connecting an ending-point of one of line segments of the set of parallel line segments to a starting-point of another one of the line segments of the set of parallel line segments; identify a first point on the first line segment that is a maximum distance from the polygon encoded by the boundary data structure; split the first line segment into two line segments, having a starting-point matching a starting-point of the first line segment and an ending-point matching an ending-point of the first line segment, that connect at a second point on the polygon encoded by the boundary data structure that is closest to the first point; and determine a smoothed path based on the path, wherein the smooth path includes curved turns between consecutive line segments of the path.

In the second aspect, the systems may include actuators configured to control motion of the vehicle; and the processing apparatus may be configured to control the processing apparatus may be configured to, using one or more of the actuators, the vehicle to move along the smoothed path in an area depicted by the map. In the second aspect, the processing apparatus may be attached to the vehicle. In the second aspect, transmit data based on the smoothed path to the vehicle via a wireless communications network.

In a third aspect, the subject matter described in this specification can be embodied in methods that include accessing a boundary data structure that encodes a polygon on a map; generating a set of parallel line segments of a path for a vehicle on the map inside of the polygon encoded by the boundary data structure; accessing an implement-control data structure that encodes a polygon on the map and indicates a configuration for an implement attached to the vehicle; identifying a line segment of the path that is positioned within the polygon encoded by the implement-control data structure as a controlled line segment; associating the controlled line segment with the configuration for the implement; determining a smoothed path based on the path, wherein the smooth path includes curved turns between consecutive line segments of the path; and storing or transmitting a path data structure based on the smoothed path.

In the third aspect, the methods may include identifying a line segment of the path that is intersects with the polygon encoded by the implement-control data structure as an impacted line segment; and splitting the impacted line segment into two or more line segments of the path between a starting-point of the impacted line segment and an ending-point of the impacted line segment, wherein at least one of the two or more line segments is positioned within the polygon encoded by the implement-control data structure and is identified as a controlled line segment and at least one of the two or more line segments is positioned outside of the polygon encoded by the implement-control data structure. In the third aspect, accessing the implement-control data structure may include presenting the map with the line segments of the path in a graphical user interface; receiving data specifying vertices of the polygon encoded by the implement-control data structure that is based on user interaction with the graphical user interface; and receiving data indicating the configuration for the implement that is based on user interaction with the graphical user interface.

In a fourth aspect, the subject matter described in this specification can be embodied systems that include a processing apparatus configured to: access a boundary data structure that encodes a polygon on a map; generate a set of parallel line segments of a path for a vehicle on the map inside of the polygon encoded by the boundary data structure; access an implement-control data structure that encodes a polygon on the map and indicates a configuration for an implement attached to the vehicle; identify a line segment of the path that is positioned within the polygon encoded by the implement-control data structure as a controlled line segment; associate the controlled line segment with the configuration for the implement; determine a smoothed path based on the path, wherein the smooth path includes curved turns between consecutive line segments of the path; and store or transmit a path data structure based on the smoothed path.

In the fourth aspect, the processing apparatus may be configured to identify a line segment of the path that is intersects with the polygon encoded by the implement-control data structure as an impacted line segment; and split the impacted line segment into two or more line segments of the path between a starting-point of the impacted line segment and an ending-point of the impacted line segment, wherein at least one of the two or more line segments is positioned within the polygon encoded by the implement-control data structure and is identified as a controlled line segment and at least one of the two or more line segments is positioned outside of the polygon encoded by the implement-control data structure. In the fourth aspect, accessing the implement-control data structure may include presenting the map with the line segments of the path in a graphical user interface; receiving data specifying vertices of the polygon encoded by the implement-control data structure that is based on user interaction with the graphical user interface; and receiving data indicating the configuration for the implement that is based on user interaction with the graphical user interface.

In a fifth aspect, the subject matter described in this specification can be embodied in a non-transitory computer-readable storage medium storing executable instructions that, when executed by a processor, facilitate performance of operations, including accessing a boundary data structure that encodes a polygon on a map; generating a set of parallel line segments of a path for a vehicle on the map inside of the polygon encoded by the boundary data structure; generating a first line segment of the path connecting an ending-point of one of the line segments of the set of parallel line segments to a starting-point of another one of the line segments of the set of parallel line segments; identifying a first point on the first line segment that is a maximum distance from the polygon encoded by the boundary data structure; splitting the first line segment into two line segments, having a starting-point matching a starting-point of the first line segment and an ending-point matching an ending-point of the first line segment, that connect at a second point on the polygon encoded by the boundary data structure that is closest to the first point; determining a smoothed path based on the path, wherein the smooth path includes curved turns between consecutive line segments of the path; and storing or transmitting a path data structure based on the smoothed path.

In the fifth aspect, the operations may include determining, based on a turning radius of the vehicle, a size, in number of line segments of the set of parallel line segments of a path, of a repeating land pattern for traversing a subset of the set of parallel line segments that are adjacent to other members of the subset; adding a first line segment of the subset to the path to be traversed in a first direction; adding a second line segment of the subset to the path after the first line segment to be traversed in a second direction opposite of the first direction, wherein there are N line segments of the subset positioned between the first line segment and the second line segment, where N is equal to half of one less than the size of the land pattern; and adding a third line segment of the subset to the path after the second line segment to be traversed in the first direction, wherein the third segment is one of the N line segments of the subset positioned between the first line segment and the second line segment that is adjacent to the first line segment. In the fifth aspect, the operations may include continuing to add line segments to the path by skipping forward over N line segments then skipping back over N minus one line segments until the last of the N line segments of the subset positioned between the first line segment and the second line segment that is adjacent to the second line segment is added to the path to be traversed in the first direction. The operations may include adding another subset of the set of parallel line segments to the path using the land pattern of the size, starting with a first line segment outside of the subset, wherein there are N line segments of the set of parallel line segments positioned between the last line segment of the subset and the first line segment outside of the subset. In the fifth aspect, the operations may include recursively splitting line segments of the path between the starting-point of the first line segment and the ending-point of the first line segment into pairs of line segments that connect at a point on the polygon encoded by the boundary data structure, until a maximum distance between any point along the path between the starting-point of the first line segment and the ending-point of the first line segment and the polygon encoded by the boundary data structure is less than a threshold. In the fifth aspect, the operations may include accessing an obstacle data structure that encodes a polygon on the map; identifying a line segment of the path that intersects with the polygon encoded by the obstacle data structure as a blocked line segment; splitting the blocked line segment into three line segments of the path between a starting-point of the blocked line segment and an entry-point on the blocked line segment where the path enters the polygon encoded by the obstacle data structure, between the entry-point and an exit-point on the blocked line segment where the path exits the polygon encoded by the obstacle data structure, and between the exit-point and an ending-point of the blocked line segment; and splitting the line segment between the entry-point and the exit-point into two line segments, having a starting-point matching the entry-point and an ending-point matching the exit-point, that connect at a third point on the polygon encoded by the obstacle data structure that is closest to a midpoint of the line segment between the entry-point and the exit-point. In the fifth aspect, the operations may include recursively splitting line segments of the path between the entry-point and the exit-point into pairs of line segments that connect at a point on the polygon encoded by the obstacle data structure, until a maximum distance between any point along the path between the entry-point and the exit-point and the polygon encoded by the obstacle data structure is less than a threshold. In the fifth aspect, the operations may include accessing an implement-control data structure that encodes a polygon on the map and indicates a configuration for an implement attached to the vehicle; identifying a line segment of the path that is positioned within the polygon encoded by the implement-control data structure as a controlled line segment; and associating the controlled line segment with the configuration for the implement. In the fifth aspect, the operations may include identifying a line segment of the path that is intersects with the polygon encoded by the implement-control data structure as an impacted line segment; and splitting the impacted line segment into two or more line segments of the path between a starting-point of the impacted line segment and an ending-point of the impacted line segment, wherein at least one of the two or more line segments is positioned within the polygon encoded by the implement-control data structure and is identified as a controlled line segment and at least one of the two or more line segments is positioned outside of the polygon encoded by the implement-control data structure. In the fifth aspect, accessing the implement-control data structure may include presenting the map with the line segments of the path in a graphical user interface; receiving data specifying vertices of the polygon encoded by the implement-control data structure that is based on user interaction with the graphical user interface; and receiving data indicating the configuration for the implement that is based on user interaction with the graphical user interface. In the fifth aspect, the vehicle may be a tractor, the implement may be a tillage implement, and the configuration for the implement may specify a depth at which the tillage implement will be dragged. In the fifth aspect, a pair of consecutive line segments of the path may be tagged with a connection type chosen from a set that includes fillet turn and bulb turn, and wherein determining the smoothed path based on the path may include generating a curve connecting the pair of consecutive line segments of the path based on the connection type and a turning radius parameter of the vehicle. In the fifth aspect, the operations may include receiving data from a user interface identifying an edge of the polygon encoded by the boundary data structure and an angle with respect to the identified edge, wherein the set of parallel line segments are generated to be oriented at the angle with respect to the identified edge.

In a sixth aspect, the subject matter described in this specification can be embodied in a non-transitory computer-readable storage medium storing executable instructions that, when executed by a processor, facilitate performance of operations, including accessing a boundary data structure that encodes a polygon on a map; generating a set of parallel line segments of a path for a vehicle on the map inside of the polygon encoded by the boundary data structure; accessing an implement-control data structure that encodes a polygon on the map and indicates a configuration for an implement attached to the vehicle; identifying a line segment of the path that is positioned within the polygon encoded by the implement-control data structure as a controlled line segment; associating the controlled line segment with the configuration for the implement; determining a smoothed path based on the path, wherein the smooth path includes curved turns between consecutive line segments of the path; and storing or transmitting a path data structure based on the smoothed path.

In the sixth aspect, the operations may include identifying a line segment of the path that is intersects with the polygon encoded by the implement-control data structure as an impacted line segment; and splitting the impacted line segment into two or more line segments of the path between a starting-point of the impacted line segment and an ending-point of the impacted line segment, wherein at least one of the two or more line segments is positioned within the polygon encoded by the implement-control data structure and is identified as a controlled line segment and at least one of the two or more line segments is positioned outside of the polygon encoded by the implement-control data structure. In the sixth aspect, accessing the implement-control data structure may include presenting the map with the line segments of the path in a graphical user interface; receiving data specifying vertices of the polygon encoded by the implement-control data structure that is based on user interaction with the graphical user interface; and receiving data indicating the configuration for the implement that is based on user interaction with the graphical user interface.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is block diagram of an example of a system for agricultural path planning.
FIG. 2 is flow chart of an example of a process for generating a path data structure for causing an agricultural vehicle to cover a designated area.
FIG. 3 is flow chart of an example of a process for connecting consecutive line segments in a path with a boundary polygon.
FIG. 4 is flow chart of an example of a process for determining a traversal order for a set of parallel line segments in a path.
FIG. 5 is flow chart of an example of a process for adjusting a path to avoid obstacles represented by exclusionary polygons.
FIG. 6 is flow chart of an example of a process for associating implement control data with portions of a path using a polygon on the map.
FIG. 7 is flow chart of an example of a process for accessing an implement-control data structure that encodes a polygon and an implement configuration.
FIG. 8A-C is illustrations of examples of curved turns that can be used to smooth connections between line segments of a path for a vehicle.
FIG. 9 is is an illustration of an example of a map with a boundary that is based on captured location data from a tractor with Ackermann-like steering.
FIG. 10 is an illustration of an example of a graphical user interface for presenting a map in with the capability to move line segments of the path using a Move Tool.
FIG. 11 is an illustration of an example of a graphical user interface for presenting a map in with the capability to split line segments of the path.
FIG. 12 is an illustration of an example of a graphical user interface for presenting a map in with the capability to manually modify a border to dynamically determine a new path.
FIG. 13 is an illustration of an example of a graphical user interface for presenting a map in with the capability to manually modify a border to dynamically determine a new path.
FIG. 14 is an illustration of an example of a graphical user interface for presenting a map in with the capability to manually modify configuration parameters for line segments of a path with high precision.
FIG. 15 is an illustration of an example of a graphical user interface for presenting a map in with the capability to manually modify turn radius for a fillet turn of a path with high precision.
FIG. 16 is an illustration of an example of a graphical user interface for presenting a map in with the capability to manually modify bulb type and a turn radius for a fillet turn of a path with high precision.

### DETAILED DESCRIPTION

Described herein are systems and processes for agricultural path planning. A path planner system may provide the ability to generate, for a given field, a traversal plan that meets a series of provided constraints. For example, one technical requirement is the constraint that an agricultural vehicle (e.g., a tractor) cannot make a 90°turn and, more specifically, turns cannot exceed a set turning radius which may be determined both by the vehicle's own mechanical ability and by the kinematics of an implement (e.g., a sprayer or a plow) being pulled which could result in the vehicle and implement colliding if turns are done too tightly.

In some implementations, a path planning approach may have four core steps. First, a boundary data structure (e.g., a boundary file) may be accessed. The boundary data structure may be generated from an arbitrary source and may correspond to points bounding a polygon representing the field.

Second, a user can specify a line along the side of the field they want the runs of the vehicle to go down. The user can also specify an angle offset from these sides. Alternatively, a line corresponding to the shortest traversal can be automatically detected and selected. In some implementations, a user can also specify using exact GPS coordinates of a line and the precise offsets from this line that the rows should be generated on. For example, this may result in a "Controlled Traffic" pattern and allows for high precision rows that follow an exact spacing and placement (e.g., following between planting beds without running over them).

Third, using these constraints, which may be user-customizable, software may generate (1) runs down the field that provide full coverage and (2) determines the order and direction of traversal of these rows such that the path is done as efficiently as possible given the tractor and implement parameters such as turning radius. For this step, if a "Controlled Traffic" pattern has been specified, these rows may adhere strictly to this pattern even if this does not provide complete coverage of the field. The path the vehicle will follow to traverse from the end of a finished row to the start of the next one are also determined and semantic tags may be applied to points where lines intersect or need to be traversed between, marking them as needing to have a traversable turn connecting them.

These paths from the end of a finished row to the start of a new one may be determined using a collection of several algorithms chosen depending upon the constraints. One approach is just a straight-line path between the start and end. Another approach follows the border closely and ensures the tractor does not exit the field. For example, this approach may be important for fields with curving boundaries or other complexities that would result in straight lines cutting across rows inside the field or traversing outside of the boundary.

Obstacles in a field may be modeled by exclusionary polygons in the map and a path may be adjusted to avoid the obstacles.

Fourth, a user may be presented with the generated path. If the system could not satisfy the constraints for a specific section of the path, this error may be visually indicated to the user with, for example, a red x mark at a corner that extends beyond the field. The user can then use several tools to correct the path. This circumstance may occur when there are multiple options to resolve the issue by the computer, but it is unclear which one the operator will want. The user can rectify or modify the path using the following tools:

Move tool - Pieces and/or their endpoints can be moved freely by simply clicking on them. If two segments are tagged as connected, they will remain connected and the endpoint of the other pieces that are connected will be moved and adjusted with the piece. The move tool may allow extending or shortening a line in the field.

The Move tool may support constraints put on path segments. Specifically, rows can be marked as having a specific angle and the movement tool may ensure that the piece is only moved or extended along the angle it is configured to. This prevents rows from becoming misaligned and sections of the field not being completed as the result of inaccuracies with the operators adjustments.

Split tool - Pieces, specifically straight lines, may be split and the operator is also able to specify that the split point should remain connected together. This allows for a straight line to be broken into multiple pieces and then each individual piece may be adjusted. Multiple pieces may be split along a specified line with the Line Split tool variant.

Geometry/constraint modifier - Individual pieces can be right-clicked and their properties, such as the turning radius of a fillet or the angle of a line, may be manually adjusted and the piece will be updated to reflect this, while maintaining applicable constraints such as line endpoints remaining connected.

For example, paths may be represented by geometric shapes with semantic links intended to allow for traversability. Paths are thus divided into lines that connect at the endpoints. These connections are then given a semantic property (e.g., termed either a fillet or a bulb), which sets the turning radius the vehicle should take turning from one line to the next. If a vehicle (e.g., a tractor) cannot physically achieve a turn but such a turn is required to achieve complete field coverage, a bulb turn can be applied which dynamically generates a Dubins path that moves the vehicle from one line to the next.

This path representation may then be converted into a series of base geometric shapes composed of lines and arcs. In some implementations, these geometric components may then be converted into a series of coordinates termed crumbs that are spaced at a configurable distance and intended for the vehicle to follow.

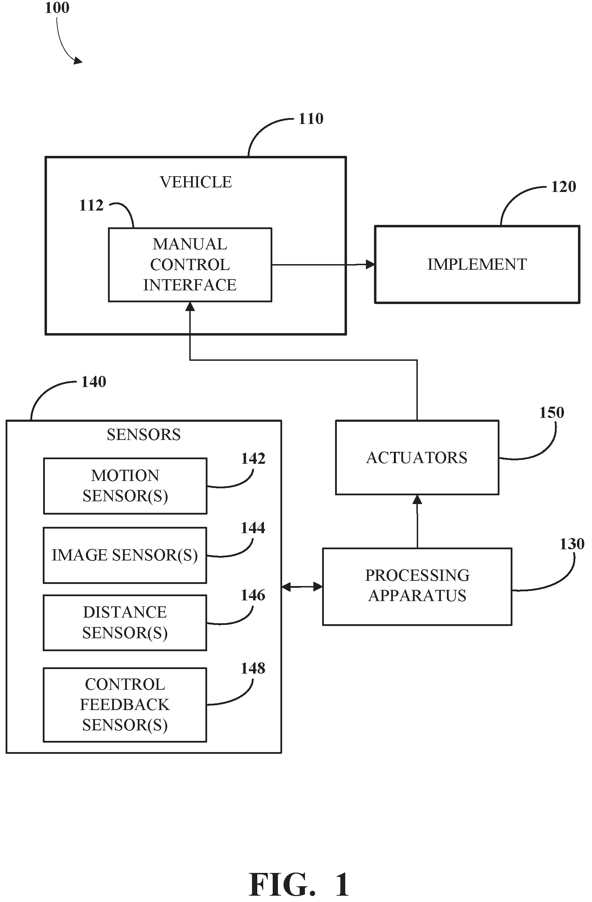

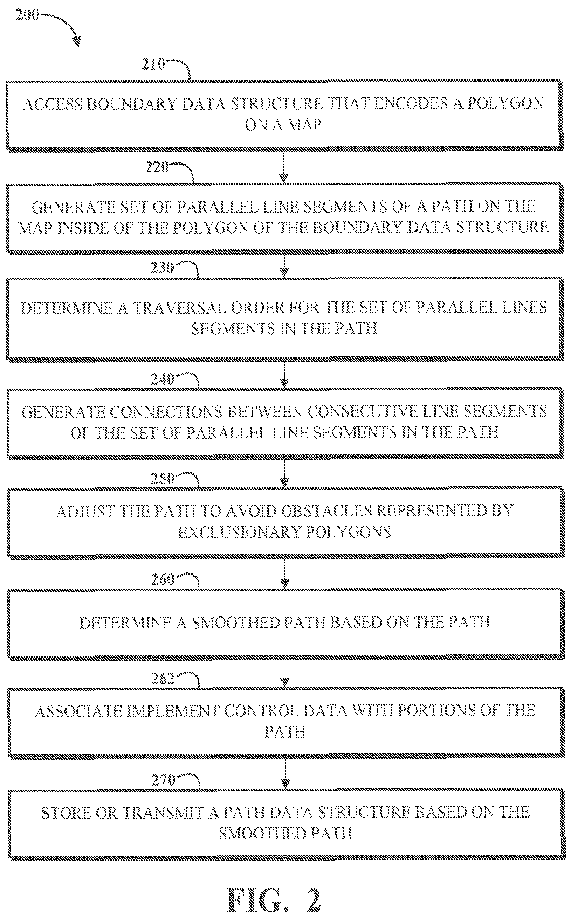

FIG. 1 is block diagram of an example of a system 100 for agricultural path planning. The system 100 system includes a vehicle 110; an implement 120 that is connected to the vehicle 110 and configured to selectively perform an operation in a vicinity of the vehicle 110; a processing apparatus 130 that is configured to control the vehicle 110 and the implement 120; sensors 140 connected to the vehicle 110 and/or the implement 120; and actuators 150 configured to control motion of the vehicle 110 and/or to control operation of an implement 120 based on control signals from the processing apparatus 130. The vehicle 110 may include a manual control interface 112 that can be used to control the vehicle 110 and the implement 120. In this example, the sensors 140 include one or more motion sensors 142, one or more image sensors 144, one or more distance sensors 146, and one or more control feedback sensors 148. For example, the system 100 may be used to implement the process 200 of FIG. 2.

The system 100 includes a vehicle 110. For example, the vehicle 110 may be a tractor, a truck, an all-terrain vehicle, a drone, or a boat. In some implementations, the vehicle 110 is configured to move across land. For example, the vehicle 110 may include wheels, tracks, and/or treads. In some implementations, the vehicle 110 is configured to fly. For example, the vehicle 110 may include wings and/or propellers. In some implementations, the vehicle 110 is configured to move through or across the surface of water. For example, the vehicle 110 may include a propeller, an impeller, or a pump-jet. The vehicle 110 may include a manual control interface 112 that can be used to control the vehicle 110. For example, the manual control interface 112 may include a steering wheel, an accelerator pedal, and a brake pedal. In some implementations, the manual control interface 112 also controls the operation of the implement 120. For example, the manual control interface 112 may include one or more joysticks, levers, and/or buttons for controlling the implement 120.

The system 100 includes an implement 120 that is connected to the vehicle 110 and configured to selectively perform an operation in a vicinity of the vehicle 110. For example, the implement 120 may include a sprayer (e.g., a boom sprayer), a spreader, a harvester, a row crop cultivator, an auger, a plow, a tiller, a backhoe, a forklift, or a mower. The implement 120 may include a tool attached to the vehicle to do work. For example, the implement 120 may be connected to the vehicle 110 via Power Take Off (PTO) connection. For example, the implement 120 may be connected to the vehicle 110 via permanent integration as components of a self-propelled farm implement. For example, the implement 120 may be primarily controlled via a 3-point hitch attached to the vehicle or via electronic or hydraulic systems. In some implementations, the implement 120 (e.g., controlled via a 3-point hitch) may be rigidly attached to the vehicle and can be raised and lowered to a constant height or a height that changes dynamically. For example, dynamic changes may be driven by load on the implement, such as from the ground during a tilling operation where the implement is partially in the ground or via some other sensor feedback on the implement or from the sensors 140 on the vehicle 110. For example, the implement 120 can be controlled via hydraulic or electric signaling. These signals may be used to control cutters, sprayers, motors, actuators, engines or any other required system to enable the implement 120 to execute a task. In some implementations, the implement 120, (e.g., a boom sprayer) may be actively leveled in real-time based on the tilt angle of the vehicle 110 (e.g., a tractor), which may be controlled with a closed loop system which includes sensing from the one or more motion sensors 142 (e.g., an IMU or other level sensing device) and the uses onboard actuators to level the implement 120.

The system 100 includes a processing apparatus 130. The processing apparatus 130 may include one or more processors having single or multiple processing cores. The processing apparatus 130 may include memory, such as random access memory device (RAM), flash memory, or any other suitable type of storage device such as a non-transitory computer readable memory. The memory of the processing apparatus 130 may include executable instructions and data that can be accessed by one or more processors of the processing apparatus 130. For example, the processing apparatus 130 may include one or more DRAM modules such as double data rate synchronous dynamic random-access memory (DDR SDRAM). In some implementations, the processing apparatus 130 may include a digital signal processor (DSP). In some implementations, the processing apparatus 130 may include a graphics processing unit (GPU). In some implementations, the processing apparatus 130 may include an application specific integrated circuit (ASIC).

The system 100 includes sensors 140 configured to capture sensor data reflecting state of the vehicle 110, the implement 120, and/or an environment the vehicle 110 is in. For example, the sensors 140 may be connected to the vehicle 110 and/or the implement. The processing apparatus 130 may be configured to access (e.g., receive via wired or wireless communications or read from a memory) sensor data captured using the sensors 140.

The sensors 140 include one or more motion sensors 142 configured to detect motion of the vehicle 110. For example, the one or more motion sensors 142 may include one or more accelerometers, gyroscopes, magnetometers, inertial measurement units, and/or global position system (GPS) receivers. For example, motion sensor data capturing using the one or more motion sensors 142 may be used to estimate a position and/or an orientation of the vehicle 110. For example, motion sensor data capturing using the one or more motion sensors 142 may be used to estimate a position and/or an orientation of the implement 120. For example, the processing apparatus 130 may be configured to access (e.g., receive via wired or wireless communications or read from a memory) motion sensor data captured using the one or more motion sensors 142.

The sensors 140 include one or more image sensors 144 connected to a vehicle 110. The one or more image sensors 144 are configured to capture images (e.g., RGB images or normalized difference vegetation index images). The one or more image sensors 144 are configured to detect light of a certain spectrum (e.g., the visible spectrum or the infrared spectrum) and convey information constituting an image as electrical signals (e.g., analog or digital signals). For example, the one or more image sensors 144 may include charge-coupled devices (CCD) or active pixel sensors in complementary metal-oxide-semiconductors (CMOS). The one or more image sensors 144 may detect light incident through respective lens (e.g., a fisheye lens). In some implementations, the one or more image sensors 144 include digital-to-analog converters. In some implementations, the one or more image sensors 144 have respective fields of view that overlap. The one or more image sensors 144 may be configured to capture images of objects in a vicinity of the vehicle 110. For example, the processing apparatus 130 may be configured to receive image data, captured using the one or more image sensors 144, depicting one or more plants in a vicinity of the vehicle 110. In some implementations, the one or more images sensors 144 may be configured to capture light in bands of the spectrum corresponding to plant vitality. For example, the one or more image sensors 144 may include a normalized difference vegetation index camera.

The sensors 140 include one or more distance sensors 146 connected to the vehicle 110. For example, the one or more distance sensors may include a lidar sensor, a radar sensor, a sonar sensor, and/or a structured light sensor. For example, sensor data captured using the one or more distance sensors 146 may include a three-dimensional point cloud data reflecting the locations of objects in a vicinity of the vehicle 110. In some implementations, point cloud data captured using the one or more distance sensors 146 may be processed and encoded as a voxelized occupancy grid. In some implementations, point cloud data captured using the one or more distance sensors 146 may be processed and encoded as a voxelized occupancy grid. For example, the processing apparatus 130 may be configured to access current point cloud data captured using the one or more distance sensors 146.

The sensors 140 include one or more control feedback sensors 148. The one or more control feedback sensors 148 may sense a state of the vehicle 110 and/or the implement 120 that is being controlled by the processing apparatus 130. In some implementations, the one or more control feedback sensors 148 may provide feedback about the vehicle state for use by a control system or for system status or health monitoring. For example, the one or more control feedback sensors 148 may include a speedometer, an encoder (e.g., an optical encoder), and/or a thermometer configured to sense temperature of an engine of the vehicle 110. For example, the one or more control feedback sensors 148 may utilize vehicle CAN-Bus integration to measure, vehicle speed, engine speed, fuel levels, and engine health, including but not limited to oil temp and pressure, coolant temperatures. For example, the one or more control feedback sensors 148 may include linear and rotary position sensors, including but not limited to those employing lasers, hall effect, resistor, switches and photogates to obtain position, including but not limited to absolute and relative positioning. For example, the one or more control feedback sensors 148 may include current sensors, including but not limited to hall effect and shunt type. For example, the one or more control feedback sensors 148 may include voltage sensors, including but not limited to digital and analog sensors. For example, the one or more control feedback sensors 148 may include force sensors, including but not limited to load cells and integrally mounted strain gauges. For example, the one or more control feedback sensors 148 may include temperature sensors, including but not limited to thermocouples, thermistors and resistance temperature detectors (RTDs). For example, the one or more control feedback sensors 148 may include pressure sensors.

The system 100 includes actuators 150 configured to control motion of the vehicle 110 and/or to control operation of the implement 120. The processing apparatus 130 may be configured to control the vehicle and/or the implement 120 using the actuators 150. In some implementations, the actuators 150 include components that can be mounted and easily removed from the vehicle 110. For example, the actuators 150 may include mechanical devices that move parts of the manual control interface 112 of the vehicle 110 (e.g., turn a steering wheel, pull a pedal, pull a lever, push a joystick, and/or depress a button). For example, the actuators 150 may be connected to the vehicle 110 in a way that allows a user to manually control the vehicle 110 using the manual control interface 112, either when the processing apparatus 130 is not actively controlling the vehicle 110 or to override control from the processing apparatus 130. For example, the actuators 150 may include electric motors controlled by the processing apparatus 130. For example, the actuators 150 may include cables connecting electric motors to parts of the manual control interface 112 and configured to pull or release those parts (e.g., a steering wheel, a pedal, or lever) in response to control signals from the processing apparatus 130. In some implementations, the actuators 150 include an interface to a messaging protocol (e.g., a vehicle CAN-bus or ISObus) for controlling part of the vehicle 110 and/or the implement 120. For example, the actuators 150 may include wires that convey control signals to downstream actuators (e.g., a motor or brakes) or downstream control interfaces (e.g., a steering wheel, a lever, a button, a pedal, or a touchscreen).

In some implementations (not shown in FIG. 1), the actuators may be integrated components of the vehicle 110. For example, the actuators 150 may include a motor, a transmission system, and/or brakes of the vehicle 110.

For example, the processing apparatus 130 may be configured to access a boundary data structure that encodes a polygon on a map; generate a set of parallel line segments of a path for a vehicle 110 on the map inside of the polygon encoded by the boundary data structure; generate a first line segment of the path connecting an ending-point of one of line segments of the set of parallel line segments to a starting-point of another one of the line segments of the set of parallel line segments; identify a first point on the first line segment that is a maximum distance from the polygon encoded by the boundary data structure; split the first line segment into two line segments, having a starting-point matching a starting-point of the first line segment and an ending-point matching an ending-point of the first line segment, that connect at a second point on the polygon encoded by the boundary data structure that is closest to the first point; and determine a smoothed path based on the path, wherein the smooth path includes curved turns between consecutive line segments of the path. In some implementations, processing apparatus 130 is attached to the vehicle 110.

For example, the processing apparatus 130 may be configured to access a boundary data structure that encodes a polygon on a map; generate a set of parallel line segments of a path for a vehicle on the map inside of the polygon encoded by the boundary data structure; access an implement-control data structure that encodes a polygon on the map and indicates a configuration for an implement attached to the vehicle; identify a line segment of the path that is positioned within the polygon encoded by the implement-control data structure as a controlled line segment; associate the controlled line segment with the configuration for the implement; determine a smoothed path based on the path, wherein the smooth path includes curved turns between consecutive line segments of the path; and store or transmit a path data structure based on the smoothed path. For example, the processing apparatus 130 may be configured to control, using one or more of the actuators 150, the vehicle 110 to move along the smoothed path in an area depicted by the map.

In some implementations, the processing apparatus 130 may be remote from the vehicle and the processing apparatus 130 is configured to transmit data based on the smoothed path to the vehicle 110 via a wireless communications network.

FIG. 2 is flow chart of an example of a process 200 for generating a path data structure for causing an agricultural vehicle to cover a designated area. The process 200 includes accessing 210 a boundary data structure that encodes a polygon on a map; generating 220 a set of parallel line segments of a path for a vehicle on the map inside of the polygon encoded by the boundary data structure; determining 230 a traversal order for the set of parallel line segments in the path; generating 240 connections between consecutive line segments of the set of parallel line segments in the path; adjusting 250 the path to avoid obstacles represented by exclusionary polygons; determining 260 a smoothed path based on the path; associating 262 implement control data with portions of a path; and storing or transmitting 270 a path data structure based on the smoothed path. For example, the process 200 may be implemented using the system 100 of FIG. 1. For example, the process 200 may be implemented using a processing apparatus (e.g., like the processing apparatus 130) that is remote from a vehicle that will use the path data structure.

The process 200 includes accessing 210 a boundary data structure that encodes a polygon on a map. For example, the polygon may be encoded by a list of vertices of the polygon. In some implementations, accessing 210 the boundary data structure may include receiving a collection of bread crumb coordinates recorded around a boundary of a field and fitting a polygon to the set of breadcrumbs to determine polygon. In some implementations, the boundary data structure may be accessed 210 via a communications link. For example, the boundary data structure may be accessed 210 via a wireless or wired communications interface (e.g., Wi-Fi, Bluetooth, USB, HDMI, Wireless USB, Near Field Communication (NFC), Ethernet, a radio frequency transceiver, and/or other interfaces). In some implementations, the boundary data structure may be accessed 210 directly from a user interface (e.g., a graphical user interface). In some implementations, the boundary data structure may be accessed 210 by retrieving the boundary data structure from a memory or other data storage apparatus.

The process 200 includes generating 220 a set of parallel line segments of a path for a vehicle on the map inside of the polygon encoded by the boundary data structure. For example, the set of parallel line segments may collectively cover most of the area with the polygon of the boundary data structure when the width of an implements effect is considered. In some implementations, the spacing between the line segments in the set of parallel lines segments is selected based on a width of an implement to be used by a vehicle that will traverse the path. For example, the set of parallel lines segments may be aligned with crop rows in a field represented by the boundary data structure. For example, the set of parallel lines segments may be oriented parallel to a long edge of the polygon of the boundary data structure. In some implementations, the process 200 may include receiving data from a user interface identifying an edge of the polygon encoded by the boundary data structure and an angle with respect to the identified edge. The set of parallel line segments may be generated to be oriented at the angle with respect to the identified edge. In some implementations, a line corresponding to the shortest traversal can be automatically detected and selected. A user can also specify using exact GPS coordinates of a line and the precise offsets from this line that the set of parallel lines should be generated on. This is a "Controlled Traffic" pattern and allows for high precision rows that follow an exact spacing and placement (e.g., following between beds without running over them). In some implementations, multiple sets of parallel line segments may be generated achieve a high level of coverage of the polygon.

The process 200 includes determining 230 a traversal order for the set of parallel line segments in the path. For example, determining 230 the traversal order may include determining the order and direction of traversal of the line segments in the set of parallel line segments such that the path may be traversed efficiently given the vehicle and implement parameters such as turning radius. A variety of traversal approaches may be used, such as, for example, Skip 1/2, Skip 2/4, adjacent, land pattern, L-Skip 2, and tight mulch. Some of these approaches follow a relatively fixed repeating pattern with special handling for the last few rows if the field is not perfectly divisible by the pattern repetition. However, "L-Skip 2" is an example of a more geometry aware pattern, and it intelligently determines for L-shaped fields, where the boundary "jumps" from one distance to the other and ensures that the pattern avoids unnecessary traversal along this vertical edge.

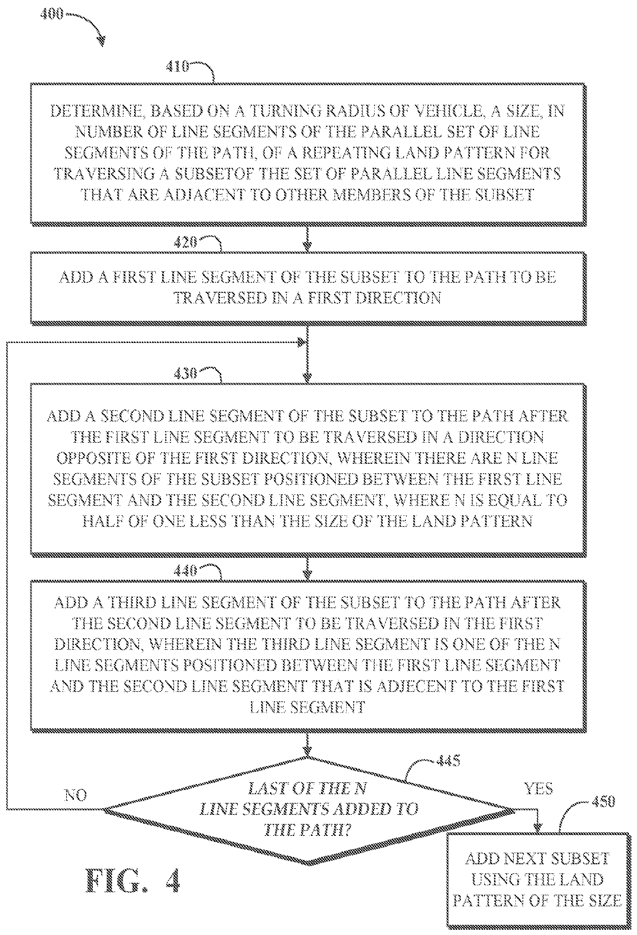

For example, the Land pattern approach may be implemented as follows:
Determine, given the turning radius, the smallest number of rows that can make up a repeating block. This may be determined using division. If n*2 lines is the smallest number, then the algorithm proceeds as follows:
Set i=1:
Add line i to be done.
Now do line n + i
Now add 1 to i: i = i + 1
Repeat until i == n
Now do this for the rest of the "lands", each time, setting i to start n*2 higher. There are some additional complexities when the field is not perfectly divisible. This is a much higher cost pattern than Skip 1/2, but works for implements that can only make left turns whereas Skip 1/2 requires both left turns and right turns. By having a library of options for the traversal order approach, the good path for the specific field can be selected in many cases. For example, the process 400 of FIG. 4 may be implemented to determine 230 the traversal order using a Land Pattern.

In some implementations, the traversal order may be optimized by defining the problem as a graph where row ends connect to other row ends and a Manhattan distance is used to approximate the traversal cost between the two row ends. A minimum cost graph traversal may then be computed (e.g., using a traveling salesman algorithm).

The process 200 includes generating 240 connections between consecutive line segments of the set of parallel line segments in the path. The path for the vehicle from the ending-point of a line segment of the set of parallel lines to the starting-point of a next line segment of the set of parallel line segments under the traversal order may be generated 240 for each pair of consecutive line segments in the set of parallel line segments. The path should stay within the polygon of the boundary data structure. In some cases, a single line segment from the ending-point to the next starting-point will suffice, but in other cases shape of the boundary polygon can complicate this operation. In some implementations, a recursive process may be used to generate a path along a boundary between consecutive line segments of the set of parallel line segments. An example, of a technique for connecting consecutive line segments is as follows. Inputs: two straight lines and the ends to be connected together; a polygon defining the field boundary. If the two rows to be connected are too close to be connected by a traversable line segment given the turning radius, a bulb turn may be applied instead of the following protocol. This may default to a centered bulb turn, but if a centered bulb turn would exit the field, then a right or left centered bulb turn may be used, whichever will prevent the turn from eclipsing the boundary edge. If the above condition is not met, namely a connecting line can be fit and a bulb turn will not work as the line ends are too far apart, the following protocol is used to connect the lines. Steps:
1. Create a line connecting the two lines.
2. Recursively for each created line. Determine the maximum distance of any point on that line to the nearest point to that point on the border. If this is more than a configurable tolerance, split this line such that two lines now exist which connect at this point on the border which was furthest from the initial line.
3. Once all lines are within tolerance, move the offending endpoints of any lines that are still outside of the border until all of them are inside of it (this will result because of the tolerance specified, so they may be just a couple inches outside before this step, for example).
4. Now, smooth all of the interchanges between lines using the semantic fillet turn tags. It will often occur that the path will not be able to achieve this path with the provided turn radius as lines will be too short to achieve the distance needed to complete the turn.
   a. All such issues may be identified and then resolved by adjusting the line endpoints or connecting two lines as one (removing the central endpoint) if that line does not provide sufficient difference from a straight line given a configurable tolerance. Cases that would need the line to go outside of the border may be marked with a red X on a path display and left to the user to correct by using a user interface (e.g., using the Move tool). Such cases should be rare and the software may try to avoid them. Result: A series of several lines and smoothed connections that the tractor can use to traverse from one row to the next such that it follows the edge of the border closely and does not exit the border.

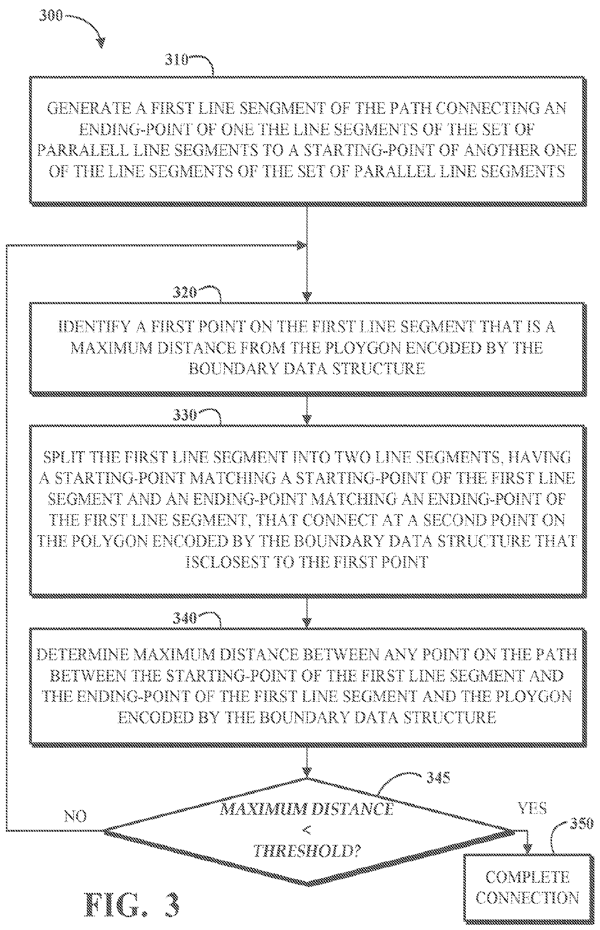

For example, the process 300 of FIG. 3 may be implemented to generate 240 connections between consecutive line segments of the set of parallel line segments in the path.

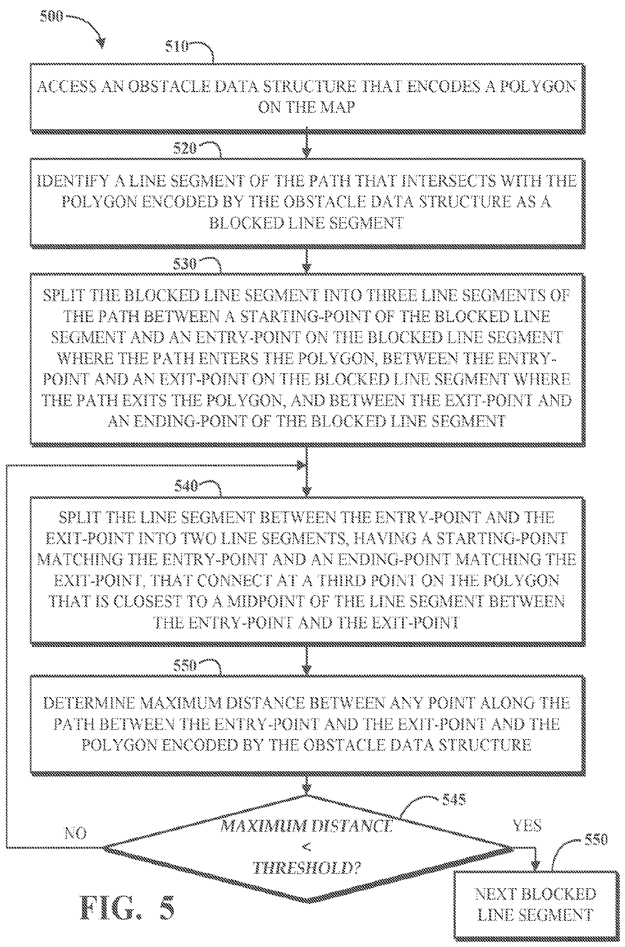

The process 200 includes adjusting 250 the path to avoid obstacles represented by exclusionary polygons. Obstacles may be defined via exclusionary polygons, which are defined using a set of provided coordinates that define the obstacle edge. For example, these coordinates can be input by a user by clicking a series of points on the screen in order or programmatically from other sources. Processing obstacles -Obstacle polygons may be made convex by determining the smallest convex polygon that contains entirely the provided obstacle polygon. These revised obstacle polygons may then be expanded by a configurable tolerance (e.g., 4 feet). Optionally, depending upon if the setting is on, where obstacle polygons intersect the boundary, the boundary is modified such that it follows the edges of the boundary polygon that are inside the obstacle polygon. Initial Path Generation - The initial path proposal may be generated fully without respect to the obstacles, except as described in the previous step where the boundary itself is modified. Avoiding obstacles - This initial path may then be revised to avoid the obstacles via the following system outline. Identify all path components that intersect with or are contained within a revised obstacle polygon. For all identified components, replace them with components that end where they intersect the polygon boundary and connect the entry and exit points of the path by a line with both ends tagged for smoothing and connecting the previous and following points in the path. Now, this new line may be recursively split and move its endpoints to the nearest point on the revised boundary polygon to the center of this line. This procedure may continue for each side of the split line until no point along these lines are further than the previously specified tolerance from the polygon edge (e.g., 4 feet). Each split point may now be tagged with a turn. For each turn which cannot fit given the specified tolerance, the distance of the unfitting curves may be moved further from the obstacle and along the path proceeding towards or away from the polygon. This effectively means that the vehicle (e.g., a tractor) may begin turning sooner so that it can navigate around the obstacle given its limited turn radius. For example, adjusting 250 the path to avoid obstacles may include implementing the process 500 of FIG. 5.

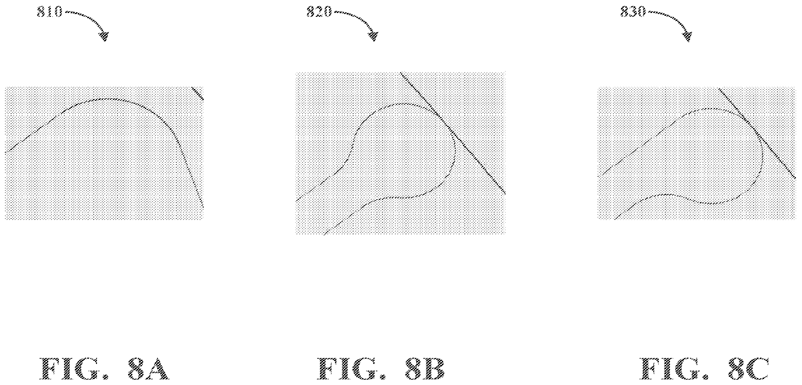

The process 200 includes determining 260 a smoothed path based on the path. The smooth path may include curved turns between consecutive line segments of the path. For example, determining 260 a smoothed path may include smoothing the interchanges between line segments using semantic fillet turn tags. For example, a pair of consecutive line segments of the path may be tagged with a connection type chosen from a set that includes fillet turn and bulb turn, and determining 260 the smoothed path based on the path may include generating a curve connecting the pair of consecutive line segments of the path based on the connection type and a turning radius parameter of the vehicle. For example, the fillet turn 810 of FIG. 8A, the bulb turn 820 of FIG. 8B, or the offset bulb turn 830 of FIG. 8C may be used smooth the transition between consecutive line segments of the path.

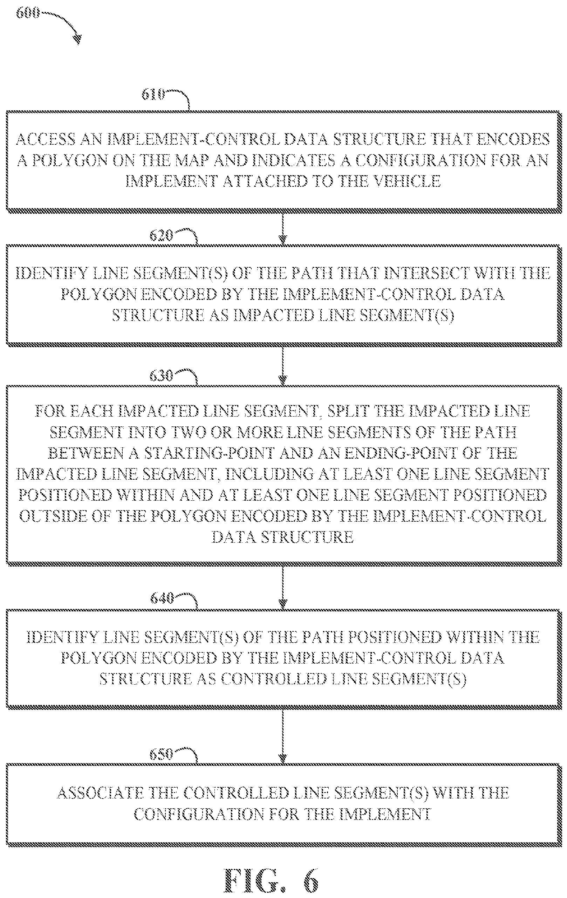

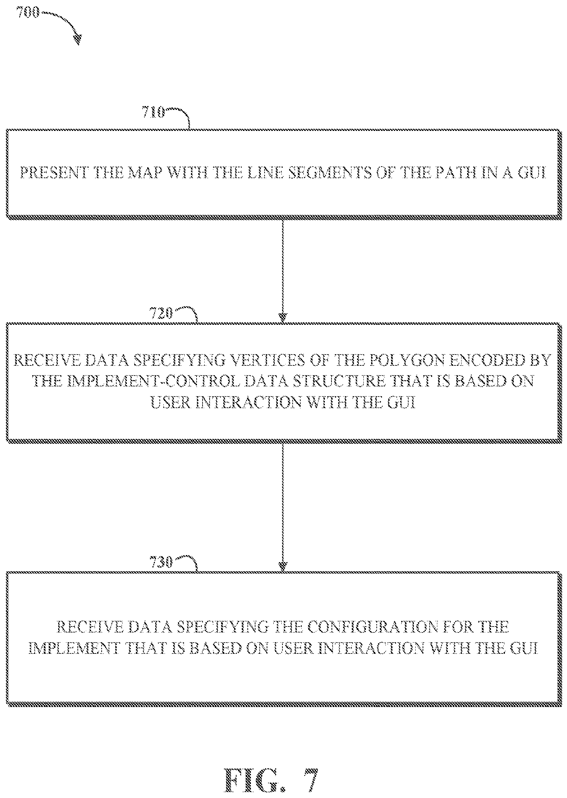

The process 200 includes associating 262 implement control data with portions of a path. For example, pre-set implement configurations may be applied to sections of the path. In some implementations, path segments corresponding the arcs and lines making up the processed path, may be clicked by the user after having enabled the implement tagging tool and specifying the configuration to tag the selected path segments with. In some implementations, a free form polygon corresponding to a series of an arbitrarily large number of points may be selected in the path visualizer. The user may then, after enabling the implement tagging tool, click anywhere in the polygon and the parts of all pieces contained within the polygon may be given the selected tag. Pieces that are partially contained may be split and only components inside of the selected polygon will be given the configuration. For example, the process 600 of FIG. 6 may be implemented to associate 262 implement control data with portions of a path using a polygon on the map. For example, associating 262 implement control data with portions of a path may include implementing the process 700 of FIG. 7.

The process 200 includes storing or transmitting 270 a path data structure based on the smoothed path. For example, the path data structure may be transmitted to or stored locally by a vehicle that will use the path data structure to process a field represented by the boundary data structure with an implement. For example, the path data structure may be transmitted to or stored locally by a computing device that will be used to review and/or further edit the path data structure. In some implementations, the path data structure is stored 270 in a memory (e.g., a random access memory or flash memory). In some implementations, the path data structure is transmitted 270 via a wireless network (e.g., a WiFi network or a cellular data network).

Although the process 200 is shown as a series of operations for clarity, implementations of the process 200 or any other technique or algorithm described in connection with the implementations disclosed herein can be performed in various orders or concurrently. Additionally, operations in accordance with this disclosure can be performed with other operations not presented and described herein. In some implementations, the process 200 may be augmented to include presenting the map with the line segments of the path in a graphical user interface and enabling a user to edit the path. Furthermore, one or more aspects of the systems and techniques described herein can be omitted. For example, in some implementations, the operations of adjusting 250 the path to avoid obstacles represented by exclusionary polygons and associating 262 implement control data with portions of the path may be omitted from the process 200.

FIG. 3 is flow chart of an example of a process 300 for connecting consecutive line segments in a path with a boundary polygon. The process 300 includes generating 310 a first line segment of the path connecting an ending-point of one of the line segments of the set of parallel line segments to a starting-point of another one of the line segments of the set of parallel line segments; identifying 320 a first point on the first line segment that is a maximum distance from the polygon encoded by the boundary data structure; splitting 330 the first line segment into two line segments, having a starting-point matching a starting-point of the first line segment and an ending-point matching an ending-point of the first line segment, that connect at a second point on the polygon encoded by the boundary data structure that is closest to the first point; and determining 340 a maximum distance between any point along the path between the starting-point of the first line segment and the ending-point of the first line segment and the polygon encoded by the boundary data structure. At 345, if the maximum distance is not less than the threshold (e.g., 4 feet), then continue with recursively splitting line segments of the path between the starting-point of the first line segment and the ending-point of the first line segment into pairs of line segments that connect at a point on the polygon encoded by the boundary data structure, until a maximum distance between any point along the path between the starting-point of the first line segment and the ending-point of the first line segment and the polygon encoded by the boundary data structure is less than a threshold. At 345, if the maximum distance is less than the threshold (e.g., 4 feet), then the connection is completed 350 and the system can repeated the process 300 as need to connect other pairs of consecutive line segments in the set of parallel line segments. For example, the process 300 may be implemented using the system 100 of FIG. 1. For example, the process 300 may be implemented using a processing apparatus (e.g., like the processing apparatus 130) that is remote from a vehicle that will use the path data structure.

FIG. 4 is flow chart of an example of a process 400 for determining a traversal order for a set of parallel line segments in a path. The process 400 includes determining 410, based on a turning radius of the vehicle, a size, in number of line segments of the set of parallel line segments of a path, of a repeating land pattern for traversing a subset of the set of parallel line segments that are adjacent to other members of the subset; adding 420 a first line segment of the subset to the path to be traversed in a first direction; adding 430 a second line segment of the subset to the path after the first line segment to be traversed in a second direction opposite of the first direction, wherein there are N line segments of the subset positioned between the first line segment and the second line segment, where N is equal to half of one less than the size of the land pattern; and adding 440 a third line segment of the subset to the path after the second line segment to be traversed in the first direction, wherein the third segment is one of the N line segments of the subset positioned between the first line segment and the second line segment that is adjacent to the first line segment. At 445, if the last of the N line segments has not been added to the path, then continuing to add line segments to the path by skipping forward over N line segments then skipping back over N minus one line segments until the last of the N line segments of the subset positioned between the first line segment and the second line segment that is adjacent to the second line segment is added to the path to be traversed in the first direction. At 445, if the last of the N line segments has not been added to the path, then adding 450 another subset of the set of parallel line segments to the path using the land pattern of the size, starting with a first line segment outside of the subset. There are N line segments of the set of parallel line segments positioned between the last line segment of the subset and the first line segment outside of the subset. For example, the process 400 may be implemented using the system 100 of FIG. 1. For example, the process 400 may be implemented using a processing apparatus (e.g., like the processing apparatus 130) that is remote from a vehicle that will use the path data structure.

FIG. 5 is flow chart of an example of a process 500 for adjusting a path to avoid obstacles represented by exclusionary polygons. The process 500 includes accessing 510 an obstacle data structure that encodes a polygon on the map; identifying 520 a line segment of the path that intersects with the polygon encoded by the obstacle data structure as a blocked line segment; splitting 530 the blocked line segment into three line segments of the path between a starting-point of the blocked line segment and an entry-point on the blocked line segment where the path enters the polygon encoded by the obstacle data structure, between the entry-point and an exit-point on the blocked line segment where the path exits the polygon encoded by the obstacle data structure, and between the exit-point and an ending-point of the blocked line segment; splitting 540 the line segment between the entry-point and the exit-point into two line segments, having a starting-point matching the entry-point and an ending-point matching the exit-point, that connect at a third point on the polygon encoded by the obstacle data structure that is closest to a midpoint of the line segment between the entry-point and the exit-point; and determining 550 a maximum distance between any point along the path between the entry-point and the exit-point and the polygon encoded by the obstacle data structure. At 545, if the maximum distance is not less than a threshold (e.g., 4 feet), then recursively splitting line segments of the path between the entry-point and the exit-point into pairs of line segments that connect at a point on the polygon encoded by the obstacle data structure, until a maximum distance between any point along the path between the entry-point and the exit-point and the polygon encoded by the obstacle data structure is less than a threshold. At 545, if the maximum distance is less than a threshold (e.g., 4 feet), then the process 500 may be repeated to identify and process a next blocked line segment until no blocked line segments remain. For example, the process 500 may be implemented using the system 100 of FIG. 1. For example, the process 500 may be implemented using a processing apparatus (e.g., like the processing apparatus 130) that is remote from a vehicle that will use the path data structure.

FIG. 6 is flow chart of an example of a process 600 for associating implement control data with portions of a path using a polygon on the map. The process 600 includes accessing 610 an implement-control data structure that encodes a polygon on the map and indicates a configuration for an implement attached to the vehicle; identifying 620 one or more line segments of the path that intersect with the polygon encoded by the implement-control data structure as impacted line segments; for each impacted line segment, splitting 630 the impacted line segment into two or more line segments of the path between a starting-point of the impacted line segment and an ending-point of the impacted line segment, wherein at least one of the two or more line segments is positioned within the polygon encoded by the implement-control data structure and is identified 640 as a controlled line segment and at least one of the two or more line segments is positioned outside of the polygon encoded by the implement-control data structure; identifying 640 one or more line segments of the path that are positioned within the polygon encoded by the implement-control data structure as a controlled line segment; and associating 650 the one or more controlled line segments with the configuration for the implement. In some implementations, the vehicle is a tractor, the implement is a tillage implement, and the configuration for the implement specifies a depth at which the tillage implement will be dragged. For example, the process 600 may be implemented using the system 100 of FIG. 1. For example, the process 600 may be implemented using a processing apparatus (e.g., like the processing apparatus 130) that is remote from a vehicle that will use the path data structure.

FIG. 7 is flow chart of an example of a process 700 for accessing an implement-control data structure that encodes a polygon and an implement configuration. The process 700 includes presenting 710 the map with the line segments of the path in a graphical user interface; receiving 720 data specifying vertices of the polygon encoded by the implement-control data structure that is based on user interaction with the graphical user interface; and receiving 730 data indicating the configuration for the implement that is based on user interaction with the graphical user interface. In some implementations, the map is presented 710 by displaying on a local screen. In some implementations, the map is presented 710 by transmitting an encoding of the map (e.g., in an html webpage) to remote device that a user can use to view the map. In some implementations, the data specifying vertices is received 720 from a locally connected touchscreen, mouse, and/or keyboard. In some implementations, the data specifying vertices is received 720 via network communications with a user device. In some implementations, the data indicating the configuration for the implement is received 730 from a locally connected touchscreen, mouse, and/or keyboard. In some implementations, the data indicating the configuration for the implement is received 730 via network communications with a user device. For example, the process 700 may be implemented using the system 100 of FIG. 1. For example, the process 700 may be implemented using a processing apparatus (e.g., like the processing apparatus 130) that is remote from a vehicle that will use the path data structure.

FIG. 8A-C is illustrations of examples of curved turns that can be used to smooth connections between line segments of a path for a vehicle. FIG. 8A depicts a fillet type turn 810. FIG. 8B depicts a bulb type turn 820. The turn 820 is a centered bulb turn. FIG. 8C depicts an offset bulb type turn 830. In this example, the turn 830 is offset to the right.

### Boundary Representation

The boundary may be represented as a sequence of coordinates in a coordinate frame local to the field. For example, these coordinates may be generated by moving a tractor or other properly equipped system such as a drone around the edge of the field, marking off the area that the vehicle (e.g., a tractor) can operate in.

### Boundary Processing

The driven boundary may have rounded corners recessed from the true boundary if driven by a vehicle with an Ackermann-like steering. Some systems provide the optional ability to rectify this boundary representation. Specifically, this boundary may be processed to correct these rounded corners by detecting sections of the boundary that moves from a roughly straight line to another roughly straight line at no less than a 45° angle from the previous, and if this adjustment is done at no more than a set configurable distance. If so, the points around the detected corner that exceed a configurable angle deviance from either edge, may be removed. These points may then be replaced by a uniformly and configurably distanced extrapolation of the best fit line for the respective edges up until the point where the two detected edges intersect.

Non-smoothed edge resulting in edge cutting further into field than it should be. With actual edge, NO lines but rows would need to be in the field, but with the boundary as it stands, this cannot be achieved.

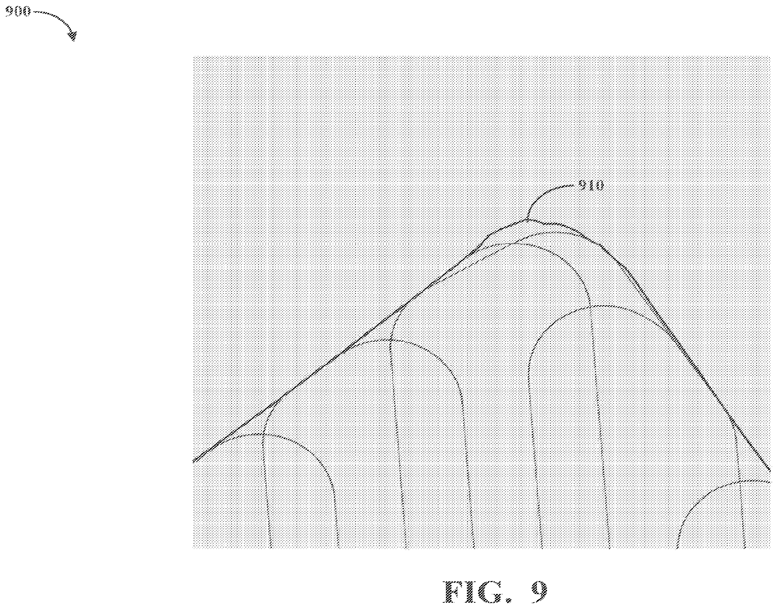

FIG. 9 is an illustration of an example of a map 900 with a boundary 910 that is based on captured location data from a tractor with Ackermann-like steering. The resulting inaccurately rounded corner of the boundary 910 results in a part of the filed being made unnecessarily in accessible to a vehicle following a planned path based on the unmodified boundary 910. This problem may be addressed by identifying this as a corner of two edges of the boundary, estimating the two edges, and extending the edges to their intersection.

### User Editing Tools

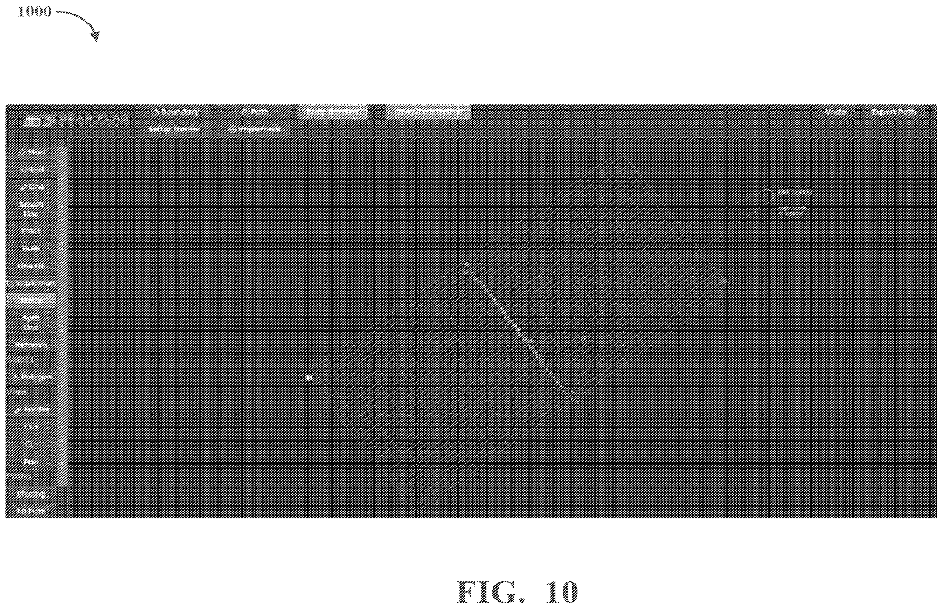

Move Tool: line segment from the set of parallel line segments retains fixed angle during free-hand extension in this example. More general use case is, to "clean up" automatic generated paths such that they hug the border more tightly or maybe go just a little bit outside of it but have cleaner edges as a result. FIG. 10 is an illustration of an example of a graphical user interface 1000 for presenting a map in with the capability to move line segments of the path using the Move Tool.

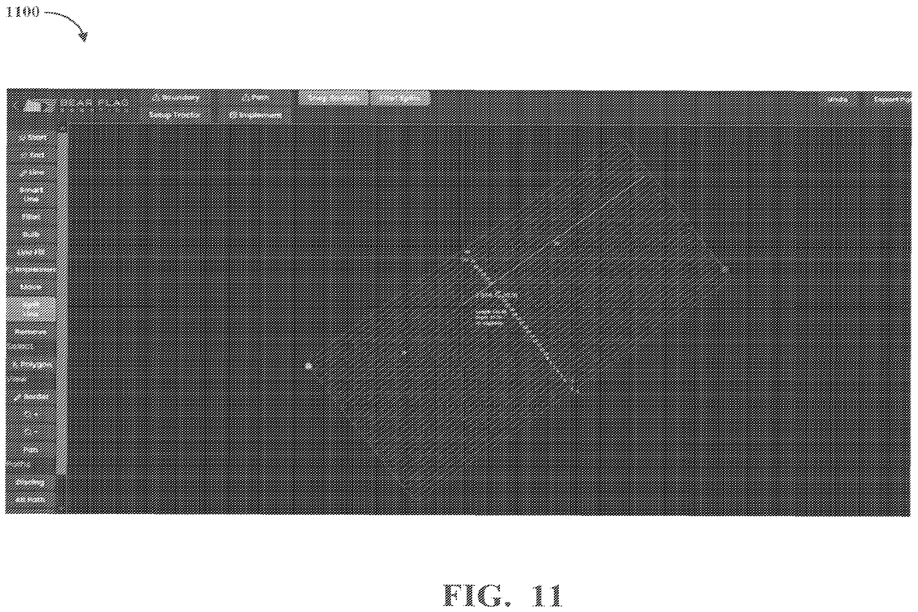

Line Split: a line segment of a path may be split at a selected point and can now be dragged to move around obstacles or for other purposes. For example, multiple line splits may be performed and these can then be dragged to make the path go around a telephone pole. FIG. 11 is an illustration of an example of a graphical user interface 1100 for presenting a map in with the capability to split line segments of the path.

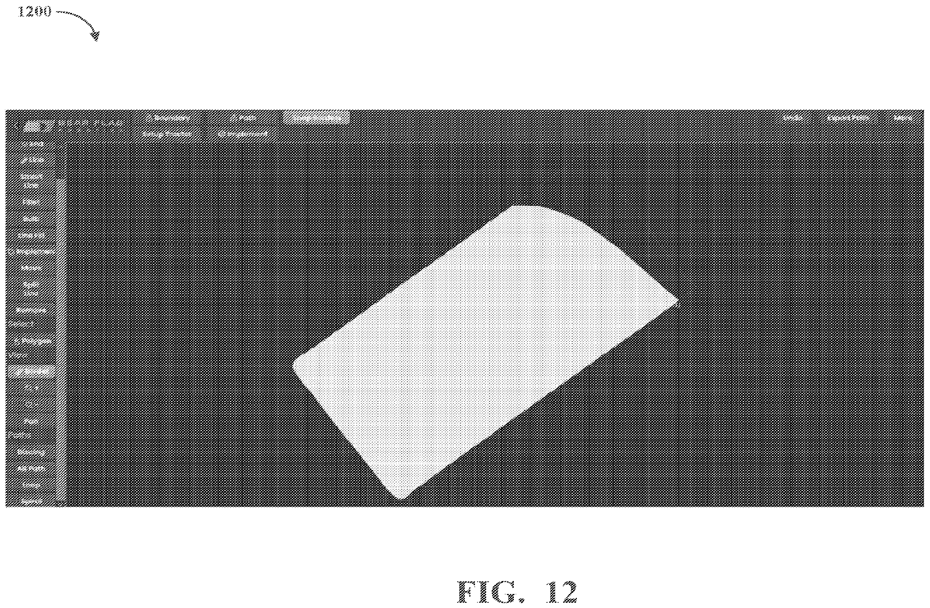

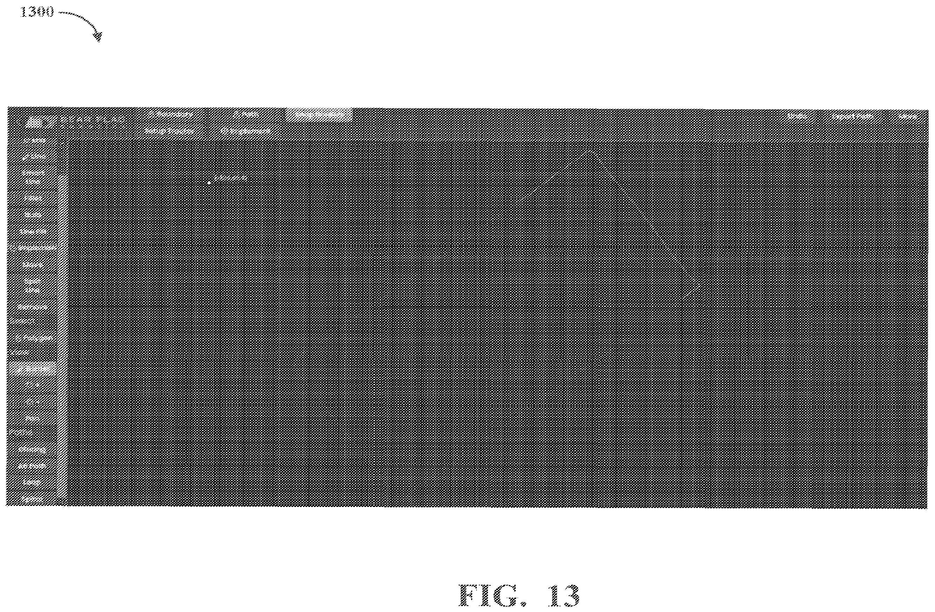

Border Mod: The border shape can be changed. For example, a section of field may be actively being harvested by workers while the rest needs to be operated on. A user can manually redefine the boundary to protect the workers. FIG. 12 is an illustration of an example of a graphical user interface 1200 for presenting a map in with the capability to manually modify a border to dynamically determine a new path. FIG. 13 is an illustration of an example of a graphical user interface 1300 for presenting a map in with the capability to manually modify a border to dynamically determine a new path.

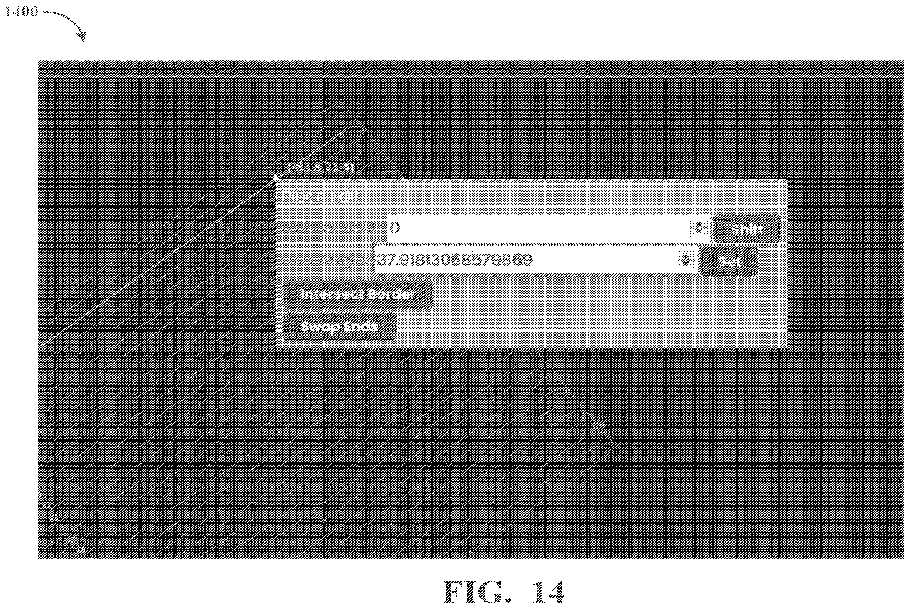

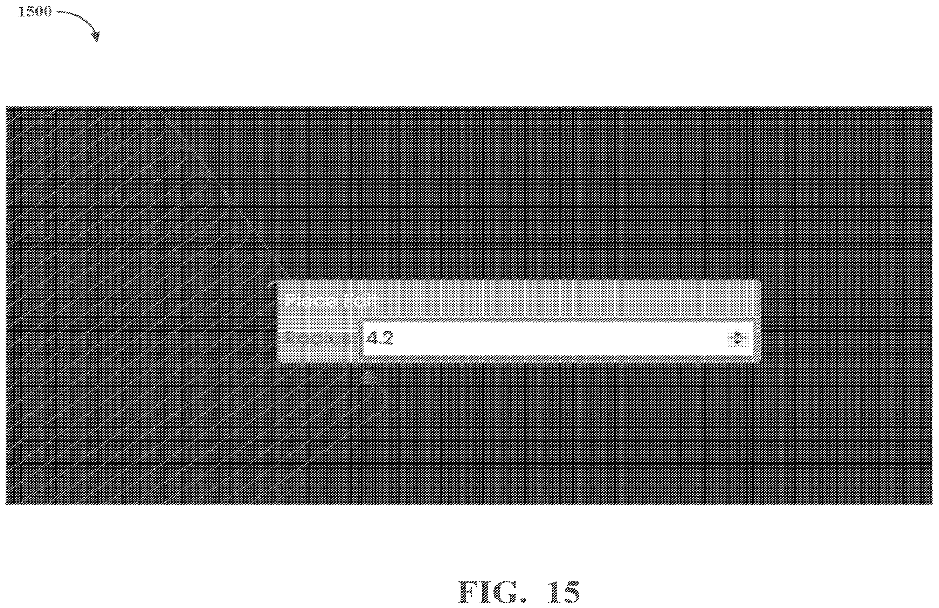

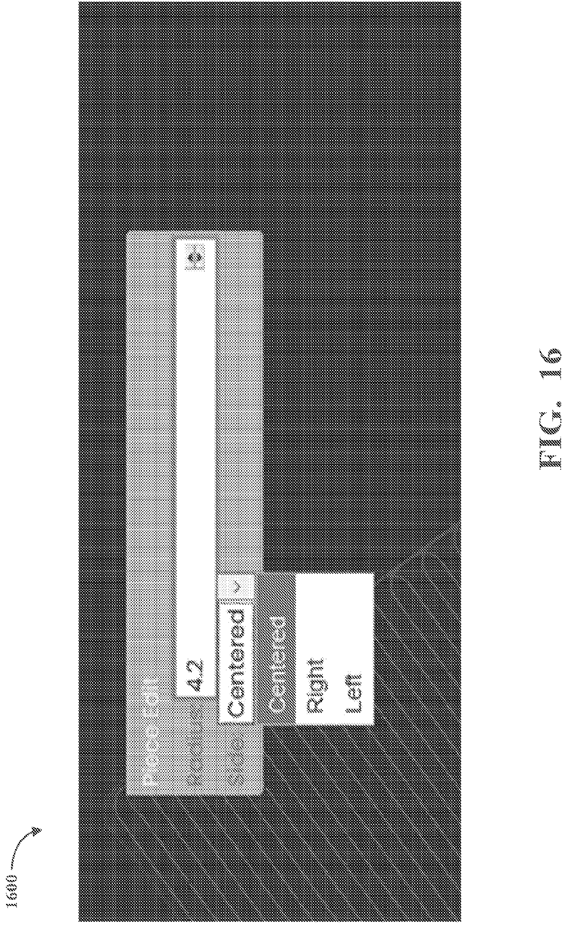

Piece Configuration: A pop-up dialog box may be provided that controls the configuration of a piece of a path when the piece is selected. For example, where a line segment does not go all the way to the border, or if it goes outside of it, the piece configuration interface may be used to, for example, extend the line to exactly intersect with the border. A line segment of the path may also be shifted by a precise offset or have its angle of orientation changed precisely. FIG. 14 is an illustration of an example of a graphical user interface 1400 for presenting a map in with the capability to manually modify configuration parameters for line segments of a path with high precision. Fillet turns can have turn radius specified. FIG. 15 is an illustration of an example of a graphical user interface 1500 for presenting a map in with the capability to manually modify turn radius for a fillet turn of a path with high precision. Bulb turns may be specified as "Centered", "Right" or "Left". This may be important as a centered bulb at the edge of the field will clip outside of it so "right" or "left" bulb can be used. Manual configuration is typically unnecessary as the software tries to pick the right type to avoid eclipsing the boundary. FIG. 16 is an illustration of an example of a graphical user interface 1600 for presenting a map in with the capability to manually modify bulb type (e.g., centered, left offset, or right offset) and a turn radius for a fillet turn of a path with high precision.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures.

Clause 1: A method comprising:
accessing a boundary data structure that encodes a polygon on a map;
generating a set of parallel line segments of a path for a vehicle on the map inside of the polygon encoded by the boundary data structure;
generating a first line segment of the path connecting an ending-point of one of the line segments of the set of parallel line segments to a starting-point of another one of the line segments of the set of parallel line segments;
identifying a first point on the first line segment that is a maximum distance from the polygon encoded by the boundary data structure;
splitting the first line segment into two line segments, having a starting-point matching a starting-point of the first line segment and an ending-point matching an ending-point of the first line segment, that connect at a second point on the polygon encoded by the boundary data structure that is closest to the first point;
determining a smoothed path based on the path, wherein the smooth path includes curved turns between consecutive line segments of the path; and
storing or transmitting a path data structure based on the smoothed path.

Clause 2: The method of clause 1, comprising:
determining, based on a turning radius of the vehicle, a size, in number of line segments of the set of parallel line segments of a path, of a repeating land pattern for traversing a subset of the set of parallel line segments that are adjacent to other members of the subset;
adding a first line segment of the subset to the path to be traversed in a first direction;
adding a second line segment of the subset to the path after the first line segment to be traversed in a second direction opposite of the first direction, wherein there are N line segments of the subset positioned between the first line segment and the second line segment, where N is equal to half of one less than the size of the land pattern; and
adding a third line segment of the subset to the path after the second line segment to be traversed in the first direction, wherein the third segment is one of the N line segments of the subset positioned between the first line segment and the second line segment that is adjacent to the first line segment.

Clause 3: The method of clause 2, comprising
continuing to add line segments to the path by skipping forward over N line segments then skipping back over N minus one line segments until the last of the N line segments of the subset positioned between the first line segment and the second line segment that is adjacent to the second line segment is added to the path to be traversed in the first direction.

Clause 4: The method of clause 3, comprising
adding another subset of the set of parallel line segments to the path using the land pattern of the size, starting with a first line segment outside of the subset, wherein there are N line segments of the set of parallel line segments positioned between the last line segment of the subset and the first line segment outside of the subset.

Clause 5: The method of any of clauses 1 to 4, comprising:
recursively splitting line segments of the path between the starting-point of the first line segment and the ending-point of the first line segment into pairs of line segments that connect at a point on the polygon encoded by the boundary data structure, until a maximum distance between any point along the path between the starting-point of the first line segment and the ending-point of the first line segment and the polygon encoded by the boundary data structure is less than a threshold.

Clause 6: The method of any of clauses 1 to 5, comprising:
accessing an obstacle data structure that encodes a polygon on the map;
identifying a line segment of the path that intersects with the polygon encoded by the obstacle data structure as a blocked line segment;
splitting the blocked line segment into three line segments of the path between a starting-point of the blocked line segment and an entry-point on the blocked line segment where the path enters the polygon encoded by the obstacle data structure, between the entry-point and an exit-point on the blocked line segment where the path exits the polygon encoded by the obstacle data structure, and between the exit-point and an ending-point of the blocked line segment; and
splitting the line segment between the entry-point and the exit-point into two line segments, having a starting-point matching the entry-point and an ending-point matching the exit-point, that connect at a third point on the polygon encoded by the obstacle data structure that is closest to a midpoint of the line segment between the entry-point and the exit-point.

Clause 7: The method of clause 6, comprising:
recursively splitting line segments of the path between the entry-point and the exit-point into pairs of line segments that connect at a point on the polygon encoded by the obstacle data structure, until a maximum distance between any point along the path between the entry-point and the exit-point and the polygon encoded by the obstacle data structure is less than a threshold.

Clause 8: The method of any of clauses 1 to 7, comprising:
accessing an implement-control data structure that encodes a polygon on the map and indicates a configuration for an implement attached to the vehicle;
identifying a line segment of the path that is positioned within the polygon encoded by the implement-control data structure as a controlled line segment; and
associating the controlled line segment with the configuration for the implement.

Clause 9: The method of clause 8, comprising:
identifying a line segment of the path that is intersects with the polygon encoded by the implement-control data structure as an impacted line segment; and
splitting the impacted line segment into two or more line segments of the path between a starting-point of the impacted line segment and an ending-point of the impacted line segment, wherein at least one of the two or more line segments is positioned within the polygon encoded by the implement-control data structure and is identified as a controlled line segment and at least one of the two or more line segments is positioned outside of the polygon encoded by the implement-control data structure.

Clause 10: The method of any of clauses 8 to 9, wherein accessing the implement-control data structure comprises:
presenting the map with the line segments of the path in a graphical user interface;
receiving data specifying vertices of the polygon encoded by the implement-control data structure that is based on user interaction with the graphical user interface; and
receiving data indicating the configuration for the implement that is based on user interaction with the graphical user interface.

Clause 11: The method of any of clauses 8 to 10, wherein vehicle is a tractor, the implement is a tillage implement, and the configuration for the implement specifies a depth at which the tillage implement will be dragged.

Clause 12: The method of any of clauses 1 to 11, wherein a pair of consecutive line segments of the path are tagged with a connection type chosen from a set that includes fillet turn and bulb turn, and wherein determining the smoothed path based on the path comprises:
generating a curve connecting the pair of consecutive line segments of the path based on the connection type and a turning radius parameter of the vehicle.

Clause 13: The method of any of clauses 1 to 12, comprising:
receiving data from a user interface identifying an edge of the polygon encoded by the boundary data structure and an angle with respect to the identified edge, wherein the set of parallel line segments are generated to be oriented at the angle with respect to the identified edge.

Clause 14: A system comprising:
a processing apparatus configured to:
access a boundary data structure that encodes a polygon on a map;
generate a set of parallel line segments of a path for a vehicle on the map inside of the polygon encoded by the boundary data structure;
generate a first line segment of the path connecting an ending-point of one of line segments of the set of parallel line segments to a starting-point of another one of the line segments of the set of parallel line segments;
identify a first point on the first line segment that is a maximum distance from the polygon encoded by the boundary data structure;
split the first line segment into two line segments, having a starting-point matching a starting-point of the first line segment and an ending-point matching an ending-point of the first line segment, that connect at a second point on the polygon encoded by the boundary data structure that is closest to the first point; and
determine a smoothed path based on the path, wherein the smooth path includes curved turns between consecutive line segments of the path.

Clause 15: The system of clause 14, comprising:
actuators configured to control motion of the vehicle; and
in which the processing apparatus is configured to control, using one or more of the actuators, the vehicle to move along the smoothed path in an area depicted by the map.

Clause 16: The system of any of clauses 14 to 15, wherein the processing apparatus is attached to the vehicle.

Clause 17: The system of any of clauses 14 to 16, wherein the processing apparatus is configured to transmit data based on the smoothed path to the vehicle via a wireless communications network.

Clause 18: A method comprising:
accessing a boundary data structure that encodes a polygon on a map;
generating a set of parallel line segments of a path for a vehicle on the map inside of the polygon encoded by the boundary data structure;
accessing an implement-control data structure that encodes a polygon on the map and indicates a configuration for an implement attached to the vehicle;
identifying a line segment of the path that is positioned within the polygon encoded by the implement-control data structure as a controlled line segment;
associating the controlled line segment with the configuration for the implement;
determining a smoothed path based on the path, wherein the smooth path includes curved turns between consecutive line segments of the path; and
storing or transmitting a path data structure based on the smoothed path.

Clause 19: The method of clause 18, comprising:
identifying a line segment of the path that is intersects with the polygon encoded by the implement-control data structure as an impacted line segment; and
splitting the impacted line segment into two or more line segments of the path between a starting-point of the impacted line segment and an ending-point of the impacted line segment, wherein at least one of the two or more line segments is positioned within the polygon encoded by the implement-control data structure and is identified as a controlled line segment and at least one of the two or more line segments is positioned outside of the polygon encoded by the implement-control data structure.

Clause 20: The method of any of clauses 18 to 19, wherein accessing the implement-control data structure comprises:
presenting the map with the line segments of the path in a graphical user interface;
receiving data specifying vertices of the polygon encoded by the implement-control data structure that is based on user interaction with the graphical user interface; and
receiving data indicating the configuration for the implement that is based on user interaction with the graphical user interface.

## Claims

1. A method comprising:
accessing (210) a boundary data structure that encodes a polygon on a map (900);
generating (220) a set of parallel line segments of a path for a vehicle (110) on the map (900) inside of the polygon encoded by the boundary data structure;
accessing an obstacle data structure that encodes a polygon on the map;
identifying a line segment of the path that intersects with the polygon encoded by the obstacle data structure as a blocked line segment;
replacing at least a portion of the blocked line segment with one or more replacement line segments of the path that avoid the polygon encoded by the obstacle data structure;
determining (260) a smoothed path based on the path, wherein the smoothed path includes curved turns between consecutive line segments of the path; and
storing or transmitting (270) a path data structure based on the smoothed path.

2. The method of claim 1, comprising:
determining (410), based on a turning radius of the vehicle, a size, in number of line segments of the set of parallel line segments of the path, of a repeating land pattern for traversing a subset of the set of parallel line segments that are adjacent to other members of the subset;
adding (420) a first line segment of the subset to the path to be traversed in a first direction;
adding (430) a second line segment of the subset to the path after the first line segment to be traversed in a second direction opposite of the first direction, wherein there are N line segments of the subset positioned between the first line segment and the second line segment, where N is equal to half of one less than the size of the land pattern; and
adding (440) a third line segment of the subset to the path after the second line segment to be traversed in the first direction, wherein the third line segment is one of the N line segments of the subset positioned between the first line segment and the second line segment that is adjacent to the first line segment.

3. The method of claim 2, comprising
continuing to add line segments to the path by skipping forward over N line segments then skipping back over N minus one line segments until the last of the N line segments of the subset positioned between the first line segment and the second line segment that is adjacent to the second line segment is added to the path to be traversed in the first direction.

4. The method of claim 3, comprising
adding another subset of the set of parallel line segments to the path using the land pattern of the size, starting with a first line segment outside of the subset, wherein there are N line segments of the set of parallel line segments positioned between the last line segment of the subset and the first line segment outside of the subset.

5. The method of any of claims 1 to 4, comprising:
splitting the blocked line segment into three line segments of the path between a starting-point of the blocked line segment and an entry-point on the blocked line segment where the path enters the polygon encoded by the obstacle data structure, between the entry-point and an exit-point on the blocked line segment where the path exits the polygon encoded by the obstacle data structure, and between the exit-point and an ending-point of the blocked line segment; and
splitting the line segment between the entry-point and the exit-point into two line segments, having a starting-point matching the entry-point and an ending-point matching the exit-point, that connect at a point on the polygon encoded by the obstacle data structure that is closest to a midpoint of the line segment between the entry-point and the exit-point.

6. The method of claim 5, comprising:
recursively splitting line segments of the path between the entry-point and the exit-point into pairs of line segments that connect at a point on the polygon encoded by the obstacle data structure, until a maximum distance between any point along the path between the entry-point and the exit-point and the polygon encoded by the obstacle data structure is less than a threshold.

7. The method of any of claims 1 to 6, comprising:
accessing an implement-control data structure that encodes a polygon on the map (900) and indicates a configuration for an implement (120) attached to the vehicle (110);
identifying a line segment of the path that is positioned within the polygon encoded by the implement-control data structure as a controlled line segment; and
associating the controlled line segment with the configuration for the implement.

8. The method of claim 7, comprising:
identifying a line segment of the path that intersects with the polygon encoded by the implement-control data structure as an impacted line segment; and
splitting the impacted line segment into two or more line segments of the path between a starting-point of the impacted line segment and an ending-point of the impacted line segment, wherein at least one of the two or more line segments is positioned within the polygon encoded by the implement-control data structure and is identified as a controlled line segment and at least one of the two or more line segments is positioned outside of the polygon encoded by the implement-control data structure.

9. The method of any of claims 7 to 8, wherein accessing the implement-control data structure comprises:
presenting the map (900) with the line segments of the path in a graphical user interface (1000);
receiving data specifying vertices of the polygon encoded by the implement-control data structure that is based on user interaction with the graphical user interface (1000); and
receiving data indicating the configuration for the implement (120) that is based on user interaction with the graphical user interface (1000).

10. The method of any of claims 7 to 9, wherein the vehicle (110) is a tractor, the implement (120) is a tillage implement, and the configuration for the implement (120) specifies a depth at which the tillage implement will be dragged.

11. The method of claim 1, wherein a pair of consecutive line segments of the path are tagged with a connection type chosen from a set that includes fillet turn and bulb turn, and wherein determining the smoothed path based on the path comprises:
generating a curve connecting the pair of consecutive line segments of the path based on the connection type and a turning radius parameter of the vehicle (110).

12. The method of any of claims 1 to 11, comprising:
receiving data from a user interface identifying an edge of the polygon encoded by the boundary data structure and an angle with respect to the identified edge, wherein the set of parallel line segments are generated to be oriented at the angle with respect to the identified edge.

13. A system (100) comprising: a processing apparatus (130) configured to execute the method of any of claims 1 to 12.

14. The system (100) of claim 13, comprising actuators (150) configured to control motion of the vehicle (110), wherein the processing apparatus is configured to control, using one or more of the actuators, the vehicle (110) to move along the smoothed path in an area depicted by the map (900).

15. A non-transitory computer-readable medium storing instructions operable to cause one or more processors to perform the operations of any of claims 1 to 12.
